# EUROPÄISCHE PATENTSCHRIFT

(11) **EP 3 479 162 B1**
(45) Veröffentlichungstag und Bekanntmachung des Hinweises auf die Patenterteilung: **10.11.2021**
(21) Anmeldenummer: 17739487.1
(22) Anmeldetag: 22.06.2017
(51) Int. Cl.: G02B 27/09

(54) **ANORDNUNG ZUR ERZEUGUNG EINES BESSEL-STRAHLS**
ARRANGEMENT FOR PRODUCING A BESSEL BEAM
SYSTÈME POUR PRODUIRE UN FAISCEAU DE BESSEL

(30) Priorität: 01.07.2016 DE 102016112137; 25.08.2016 DE 102016115844
(43) Veröffentlichungstag der Anmeldung: 08.05.2019
(60) Teilanmeldung: 21195202.3
(73) Patentinhaber: Fraunhofer-Gesellschaft zur Förderung der angewandten Forschung e.V., 80686 München (DE); Friedrich-Schiller-Universität Jena, 07743 Jena (DE)
(72) Erfinder: STEINKOPF, Ralf, 07745 Jena (DE); NOLTE, Stefan, 07751 Jena (DE); VETTER, Christian, 25000 Besançon (FR); SZAMEIT, Alexander, 18209 Bad Doberan (DE); GROSS, Herbert, 07751 Kleinpürschütz (DE); ORNIGOTTI, Marco, 33210 Tampere (FI)
(74) Vertreter: Schneiders & Behrendt Bochum
(86) Internationale Anmeldenummer: PCT/EP2017/065343
(87) Internationale Veröffentlichungsnummer: WO 2018/001846

(56) Entgegenhaltungen:
- CN-A- 104 880 828
- CN-A- 105 182 523
- DE-A1- 10 044 522
- DE-A1-102004 011 190
- DE-A1-102007 063 274
- GB-A- 2 256 338

## Beschreibung

Die Erfindung betrifft eine Vorrichtung zur Erzeugung eines Bessel-Strahls, mit einem Strahlformungselement, das einen als ebene elektromagnetische Welle einfallenden Strahl in einen Bessel-Strahl transformiert.

Unter einem Bessel-Strahl versteht man eine spezielle Form von elektromagnetischen Wellen, insbesondere Lichtstrahlen, deren wesentliche Eigenschaft ist, dass sie nicht beugend sind, das Strahlprofil bleibt während der Ausbreitung erhalten.

Häufig wird für einen real erzeugten Bessel-Strahl der Begriff "Bessel-Gauß-Strahl" verwendet, da ein idealer Bessel-Strahl aus physikalischen Gründen nicht erzeugt werden kann. Auf diese Unterscheidung wird im Folgenden verzichtet. Die Erfindung bezieht sich auf unter realen Bedingungen erzeugte, d.h. nichtideale Bessel-Strahlen.

Es ist aus dem Stand der Technik bekannt, zur Erzeugung eines Bessel-Strahls ein Strahlformungselement zu verwenden, das einen als ebene elektromagnetische Welle einfallenden Strahl in einen Bessel-Strahl transformiert. Da es sich bei einem Bessel-Strahl um eine konische Superposition ebener Wellen handelt, werden im Stand der Technik als Strahlformungselemente hauptsächlich konische Linsen, so genannte Axicons verwendet (vgl. J. Arlt und K. Dholakia: "Generation of high-order Bessel beams by use of an axicon", Optics Communications 177.1-6, 2000, S. 297-301). Diese weisen eine hohe Effizienz auf, sind aber recht unflexibel, wenn es darum geht, mehrere Strahlen miteinander zu kombinieren. Darüber hinaus sind Axicons aufgrund der zentralen Spitze schwierig in guter Qualität herzustellen, entsprechend teuer und außerdem anfällig in Bezug auf Beschädigungen.

Sollen aufwändigere Varianten von Bessel-Strahlen erzeugt werden, wie z.B. Bessel-Strahlen höherer Ordnung, werden im Stand der Technik häufig räumliche Lichtmodulatoren (SLMs) verwendet. Diese sind nach Art von Flüssigkristall-Displays ausgestaltet, die eine räumlich variable Phasen- und/oder Amplitudenmodulation der einfallenden ebenen elektromagnetischen Wellen ermöglichen. SLMs werden mittels Computern angesteuert. Sie sind äußerst flexibel einsetzbar. Die Verwendung von SLMs ist allerdings aufwendig und teuer. Ein weiterer Nachteil ist, dass SLMs eine niedrige Zerstörschwelle und hohe Verluste bei der Strahlumformung aufweisen.

Eine weitere Lösung zur Erzeugung von Bessel-Strahlen ist aus der Offenbarung der GB 2 256 338 A bekannt.

Vor diesem Hintergrund ist es Aufgabe der Erfindung, eine gegenüber dem Stand der Technik verbesserte Vorrichtung zur Erzeugung eines Bessel-Strahls bereitzustellen. Die oben beschriebenen Nachteile der konventionellen Erzeugung von Bessel-Strahlen sollen vermieden werden.

Diese Aufgabe löst die Erfindung ausgehend von einer Vorrichtung der eingangs angegebenen Art durch die Merkmale des Anspruchs 1. Das Strahlformungselement umfasst wenigstens eine Ringlinse und eine Fourieroptik.

Die erfindungsgemäße Erzeugung des Bessel-Strahls basiert auf dem Fourier-Prinzip. Ein Bessel-Strahl ist, wie oben bereits erwähnt, eine konische Superposition ebener Wellen. Entsprechend ist das Raumwinkelspektrum des Bessel-Strahls durch einen scharfen, kreisförmigen Ring gegeben. Der Bessel-Strahl ergibt sich durch räumliche Fourier-Transformation eines solchen Rings.

Gemäß der Erfindung wird zur Erzeugung ringförmiger Strahlung eine Ringlinse verwendet. Die Ringlinse weist eine ringförmige, gekrümmte Oberfläche auf, die, im Querschnitt gesehen, einer Zylinderlinse entspricht, die in sich, z.B. zu einem Kreis, geschlossen ist. Die Ringlinse erzeugt in ihrer Fokusebene ein scharfes ringförmiges Strahlprofil. Dieses wird mittels der im Strahlverlauf der Ringlinse nachgeordneten Fourieroptik räumlich Fourier-transformiert. Das Resultat ist der gewünschte Bessel-Strahl. Die erfindungsgemäße Ringlinse kann, muss aber nicht zwingend kreisringförmig sein. Abweichende Ringformen, beispielsweise elliptische Formen, sind ebenfalls denkbar, um entsprechende Varianten von Bessel-Strahlen zu erzeugen.

Die Fourier-Transformation kann vorteilhaft durch eine Fourierlinse, d.h. eine beliebige Sammellinse erfolgen, die, der Ringlinse nachgeordnet, als Fourieroptik eingesetzt wird. Ebenso kann die Fourier-Transformation durch einfache Fernfeldpropagation, d.h. ohne besondere optische Komponenten erfolgen.

Bei Verwendung einer Fourierlinse als Fourieroptik gemäß der Erfindung sollten die Fokusebenen der Ringlinse und der Fourierlinse zusammenfallen, so dass die Ringlinse und die Fourierlinse einer Kepler-Konfiguration oder eine Galilei-Konfiguration bilden. Der Bessel-Strahl kann entsprechend entweder mit oder ohne Zwischenfokus erzeugt werden.

Zur Superposition mehrerer Bessel-Strahlen kann das Strahlformungselement der erfindungsgemäßen Vorrichtung zwei oder mehr konzentrische Ringlinsen aufweisen. Deren Fokusebenen sollten vorzugsweise zusammenfallen. Die konzentrischen Ringlinsen erzeugen in ihrer gemeinsamen Fokusebene ein Strahlprofil mit Ringen unterschiedlicher Durchmesser, die durch die Fourieroptik in entsprechend überlagerte Bessel-Strahlen transformiert werden.

Bessel-Strahlen höherer Ordnung sind dadurch charakterisiert, dass sie zusätzlich zu ihrem ringförmigen Raumwinkelspektrum einen helikalen Phasenterm N-ter Ordnung aufweisen. N steht dabei für den Phasenhub nach einer vollen Umdrehung in Umfangsrichtung in Vielfachen von 2π. Zur Erzeugung eines Bessel-Strahls höherer Ordnung kann entsprechend im Strahlengang der erfindungsgemäßen Anordnung ein Phasenmanipulationselement angeordnet sein, das dem Strahl eine über den Strahlquerschnitt variierende Phasenverschiebung aufprägt, insbesondere eine helikale Phasenverschiebung. Praktisch realisiert werden kann dies z.B. durch eine Phasenplatte, die aus einem Material mit gegenüber der Umgebung abweichendem Brechungsindex besteht und bezüglich der Strahlachse in radialer Richtung und in Umfangsrichtung eine variierende Dicke aufweist, um so die gewünschte helikale Phasenverschiebung zu erhalten.

Das Strahlformungselement der erfindungsgemäßen Vorrichtung kann vorteilhaft besonders kompakt realisiert werden, indem die Ringlinse mit der Fourierlinse einstückig ausgebildet wird. Hierzu kann das Strahlformungselement auf der der einfallenden ebenen Welle zugewandten Oberfläche eine konkave Ringlinse aufweisen. Die gegenüberliegende Oberfläche ist gekrümmt ausgebildet und bildet so die Fourierlinse aus. Die zusammenfallenden Fokusebenen der Ringlinse und der Fourierlinse liegen auf der der einfallenden ebenen Welle zugewandten Seite des Strahlformungselementes in einer gemeinsamen Ebene (Galilei-Konfiguration).

Erfindungsgemäß weist das Strahlformungselement der Vorrichtung eine ringförmige Apertur auf, die mit der Ringlinse korrespondiert. Dadurch wird ausschließlich die ringförmige Strahlung im Fokus der Ringlinse durch die Fourieroptik transformiert. Störende Anteile der Strahlung werden ausgeblendet.

Um die Effizienz bei der Transformation der ebenen Welle in den Bessel-Strahl zu optimieren, kann bei der erfindungsgemäßen Vorrichtung ein dem Strahlformungselement im Strahlverlauf vorgeschaltetes Strahlvorformungselement vorgesehen sein, das den als ebene Welle einfallenden Lichtstrahl in einen Strahl mit ringförmigem Querschnitt transformiert. Das Strahlvorformungselement bewirkt, dass der einfallende Strahl vollständig in den Bessel-Strahl transformiert wird. Die Strahlvorformung erfolgt korrespondierend zur Geometrie der Ringlinse. Beispielsweise kann das Strahlvorformungselement ein konkaves Axicon und ein diesem im Strahlverlauf nachgeschaltetes konvexes Axicon umfassen.

Ausführungsbeispiele der Erfindung werden nachfolgend anhand der Zeichnungen näher erläutert. Es zeigen:
- Figur 1:: erfindungsgemäße Vorrichtung in einer ersten Ausgestaltung;

- Figur 2:: erfindungsgemäße Vorrichtung in einer zweiten Ausgestaltung;
- Figur 3:: Strahlformungselement mit mehreren konzentrischen Ringlinsen;
- Figur 4:: Phasenplatte zur Erzeugung eines Bessel-Strahls höherer Ordnung;
- Figur 5:: Strahlvorformunqselement der erfindungsgemäßen Vorrichtung;
- Figur 6:: erfindungsgemäße Vorrichtung in einer dritten Ausgestaltung mit einstückigem Strahlformungselement.

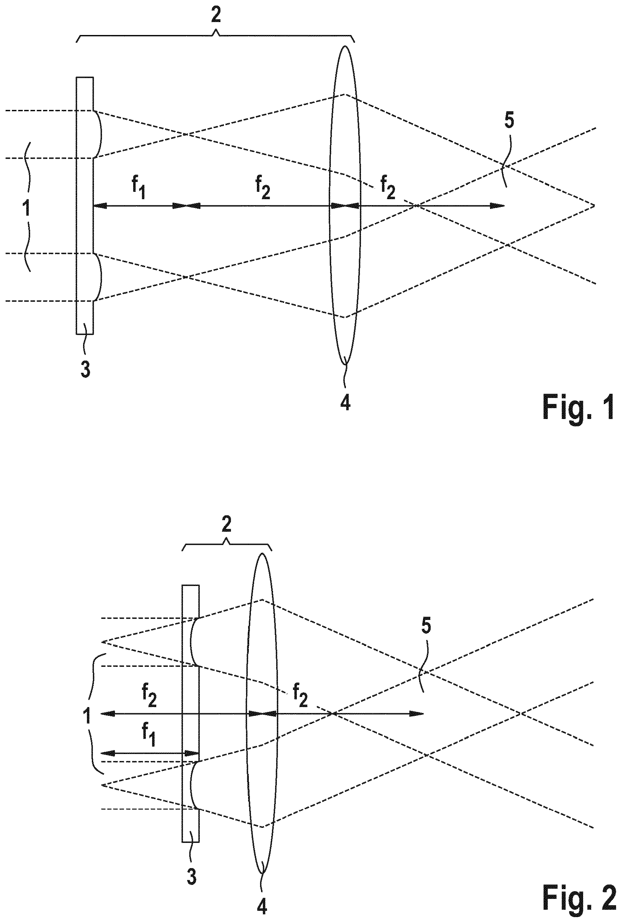

Bei der in der Figur 1 gezeigten Vorrichtung fällt ein Lichtstrahl 1 von links her ein. Die elektromagnetische Strahlung durchläuft ein Strahlformungselement 2, das durch eine konvexe Ringlinse 3 und eine Fourierlinse 4 gebildet ist. Durch das Strahlformungselement 2 wird der einfallende Strahl 1 in einen Bessel-Strahl 5 transformiert, der die Vorrichtung in der Figur 1 nach rechts verlässt. Es handelt sich um einen Bessel-Strahl 0. Ordnung. Die Brennweiten f₁ und f₂ der Ringlinse 3 bzw. der Fourierlinse 4 sind in der Figur 1 verzeichnet. Es ist zu erkennen, dass die Fokusebenen der Ringlinse 3 und der Fourierlinse 4 zusammenfallen. Somit bilden die Ringlinse 3 und die Fourierlinse 4 eine Kepler-Konfiguration, ähnlich einem Kepler-Teleskop. Die Ringlinse 3 erzeugt in der Fokusebene zwischen Ringlinse 3 und Fourierlinse 4 einen scharfen ringförmigen Strahlquerschnitt. Die dargestellte Vorrichtung weist also einen Zwischenfokus auf.

In dem Ausführungsbeispiel der Figur 2 kommt eine konkave Ringlinse 3 zum Einsatz. Die Vorrichtung weist keinen Zwischenfokus auf. Die Fokusebenen fallen auf der dem einfallenden Strahl 1 zugewandten Seite der Ringlinse 3 zusammen. Die Ringlinse 3 und die Fourierlinse 4 bilden eine Galilei-Konfiguration, ähnlich einem Galiliei-Teleskop. Die Vermeidung des Zwischenfokus ist bei Hochleistungsanwendungen von Vorteil. Außerdem ergibt sich eine deutlich kompaktere Bauweise. Nachteilig ist, dass in die Fokusebene, d.h. in die Fourierebene der Vorrichtung, nicht (z.B. durch Blenden) eingegriffen werden kann. Auch mit der in der Figur 2 dargestellten Vorrichtung wird ein Bessel-Strahl 0. Ordnung erzeugt.

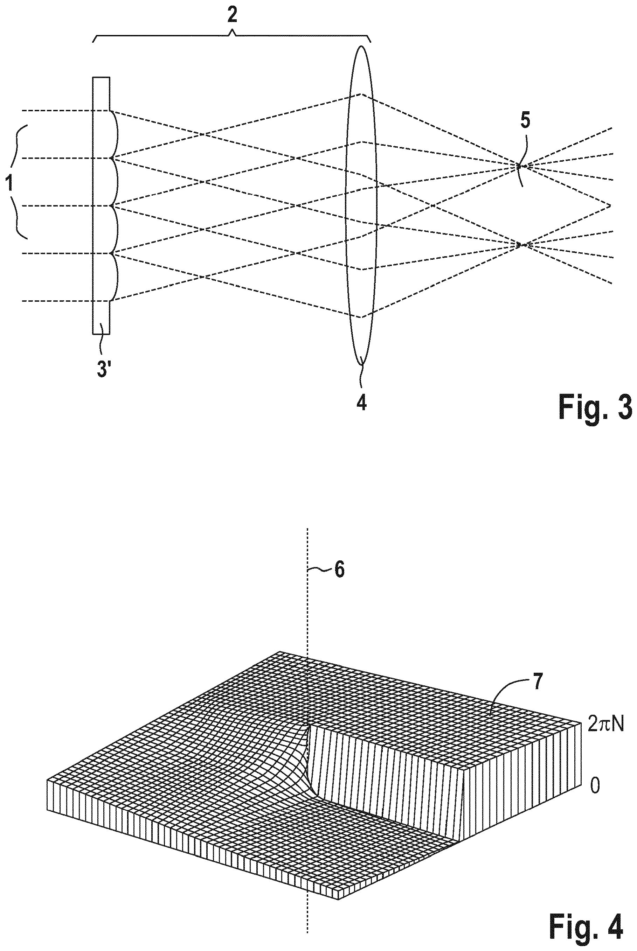

Ist es erforderlich, mehrere Bessel-Strahlen zu überlagern, kann, wie in Figur 3 gezeigt, ein Strahlformungselement 2 zum Einsatz kommen, das zwei (oder mehr) konzentrische Ringlinsen aufweist, deren Fokusebenen zusammenfallen. Bei dem Ausführungsbeispiel der Figur 3 sind zwei Ringlinsen miteinander einstückig in einem Linsenelement 3' integriert. Das Strahlformungselement 2 erzeugt einen entsprechend überlagerten Strahl 5'. In Figur 3 bilden das Linsenelement 3' und die Fourierlinse 4 wiederum eine Kepler-Konfiguration.

Das Strahlformungselement 2 weist bei den dargestellten Ausführungsbeispielen eine ringförmige Apertur auf, um die für die Erzeugung des Bessel-Strahls unerwünschten Anteile des einfallenden Strahls 1 auszublenden. Erfindungsgemäß sind die Ringlinsen 3, 3' bei den Ausführungsbeispielen der Figuren 1, 2 und 3 in den planen Bereichen, d.h. außerhalb der konvex bzw. konkav geformten ringförmigen Bereiche, reflektierend oder absorbierend beschichtet. Ebenso können die unerwünschten Anteile der Strahlung in der jeweiligen Fokusebene, z.B. durch eine geeignete Blendenanordnung, entfernt werden.

Bessel-Strahlen höherer Ordnung sind dadurch charakterisiert, dass sie zusätzlich zu ihrem ringförmigen Raumwinkelspektrum einen helikalen Phasenterm N-ter Ordnung aufweisen. Dieser kann durch ein im Strahlengang angeordnetes Phasenmanipulationselement erzeugt werden, das dem Strahl eine entsprechend über den Strahlquerschnitt variierende Phasenverschiebung aufprägt. Ein Phasenmanipulationselement in Form einer Phasenplatte, durch die dem Strahl eine helikale Phasenverschiebung aufgeprägt wird, ist in Figur 4 dargestellt. Die Phasenplatte 7, die z.B. aus Quarzglas besteht, weist bezüglich der Strahlachse 6 in radialer Richtung und/oder in Umfangsrichtung eine variierende Dicke auf. Zur Erzeugung des helikalen Phasenterms wächst z.B. die Dicke proportional zum Winkel in Umfangsrichtung an. Zur Überlagerung mehrerer Bessel-Strahlen unterschiedlicher Ordnungen kann eine Phasenplatte verwendet werden, die mehrere konzentrische "Rampen" aufweist, d.h. mehrere konzentrische, ringförmige Abschnitte mit unterschiedlich proportional zum Winkel in Umfangsrichtung variierender Dicke. Alternativ eignet sich als Phasenmanipulationselement ein räumlicher Lichtmodulator (SLM), der geeignet angesteuert wird. Das Phasenmanipulationselement kann an beliebiger Stelle im Strahlengang angeordnet sein, bei den dargestellten Ausführungsbeispielen vor oder hinter der Fourierlinse 4. Vorzugsweise ist das Phasenmanipulationselement in der Fokusebene angeordnet.

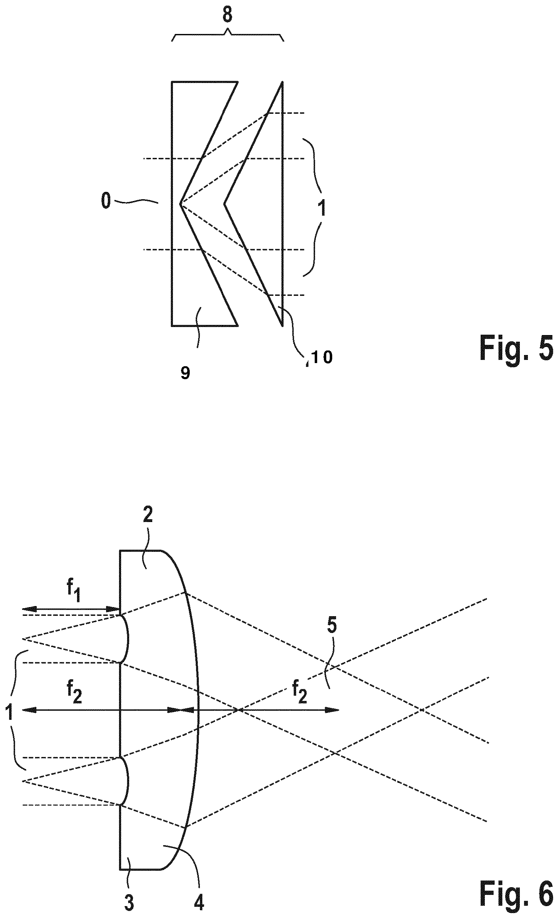

Bei den Ausführungsbeispielen der Figuren 1 und 2 erfolgt eine Vorformung der als ebene elektromagnetische Welle einfallenden Strahlung 1. Die auf die Ringlinse 3 einfallende Strahlung hat bereits einen ringförmigen Querschnitt. Diese Strahlvorformung kann mittels eines Strahlvorformungselementes 8 erfolgen, wie es in der Figur 5 dargestellt ist. Mit 0 ist der von links einfallende Strahl mit z.B. gaußförmigem Strahlprofil bezeichnet. Dieser durchläuft ein konkaves Axicon 9 und ein diesem im Strahlverlauf mit Abstand nachgeschaltetes, konvexes Axicon 10. Das Resultat ist der ringförmige Lichtstrahl 1, der, wie in den Figuren 1 und 2 gezeigt, auf die Ringlinse 3 des Strahlformungselementes 2 auftrifft. Der Durchmesser des Ringstrahls kann durch den Abstand der Axicons 9, 10 justiert werden. Durch das Strahlvorformungselement 8 lässt sich die Effizienz bei der Erzeugung des Bessel-Strahls 5 steigern.

Bei dem in der Figur 6 gezeigten Ausführungsbeispiel umfasst das Strahlformungselement 2 nur ein einzelnes monolithisches Element, indem die konkave Ringlinse 3 und die Fourierlinse 4 einstückig miteinander ausgebildet sind. Ähnlich wie bei dem in der Figur 2 dargestellten Ausführungsbeispiel fallen die Fokusebenen der Fourierlinse 4 und der Ringlinse 3 auf der dem einfallenden Strahl 1 zugewandten Seite des Strahlformungselementes 2 zusammen. Es handelt sich um eine Galilei-Konfiguration. In entsprechender Art und Weise lässt sich ein monolithisches Strahlformungselement 2 auch in Keppler-Konfiguration realisieren, bei dem dann die Fokusebene im Inneren liegt. Eine solche Ausgestaltung wäre entsprechend großvolumiger.

Die Linsenoberflächen der in den Figuren gezeigten Ringlinsen 3, 3' können sphärisch oder auch asphärisch sein. Im einfachsten Fall werden sphärische Oberflächen verwendet.

Das erfindungsgemäße Prinzip zur Erzeugung eines Bessel-Strahls kann im optischen Spektralbereich, z.B. für Lasersysteme, verwendet werden. Das Prinzip lässt sich jedoch auch in anderen Wellenlängenbereichen, wie z.B. im Bereich der Mikrowellen oder der Radiowellen, anwenden.

Vorteile der erfindungsgemäßen Vorrichtung sind die folgenden: Überlagerungen von Bessel-Strahlen sind einfach und direkt zu erzeugen. Sie erfordern keine komplexen und damit verlustbehafteten Aufbauten. Die verwendeten optischen Komponenten (Ringlinse, Fourierlinse) besitzen keine abstehenden oder scharfkantigen Strukturen und sind damit wenig anfällig in Bezug auf mechanische Beschädigungen. Die erfindungsgemäße Vorrichtung weist geringe Verluste und eine hohe Zerstörschwelle auf, so dass sie für die Anwendung im Hochleistungsbereich geeignet ist. Bei der erfindungsgemäßen Vorrichtung definiert nicht die Ringlinse, sondern die darauf folgende Fourieroptik den maximalen Aperturdurchmesser. Daher ist die komplexeste Komponente der Vorrichtung (die Ringlinse) nicht gleichzeitig auch die notwendigerweise größte Komponente.

Die erfindungsgemäße Vorrichtung kann z.B. im Bereich der Materialbearbeitung eingesetzt werden. Bessel-Strahlen weisen einen ausgedehnteren Fokus auf als konventionelle Strahlformen und zeigen Selbstheilungseigenschaften in Propagationsrichtung. Das macht Bessel-Strahlen interessant für verschiedene Arten der Materialbearbeitung wie Schneiden, Bohren, Schweißen sowie Lithographie und medizinische Anwendungen. Ebenso lässt sich der ausgedehnte Fokus von Bessel-Strahlen im Bereich der Mikroskopie einsetzen, um eine größere Schärfentiefe zu realisieren, tiefere Gewebeschichten bei medizinischen Anwendungen abzubilden sowie Rasterverfahren zu beschleunigen. Bessel-Strahlen können mit Vorteil für so genannte optische Pinzetten verwendet werden. Mit Bessel-Strahlen und deren Superpositionen können mikroskopische Teilchen oder einzelne biologische Zellen transportiert, ausgerichtet oder rotiert werden. Weiterhin sind Bessel-Strahlen vorteilhaft einsetzbar im Bereich der Messtechnik. Optische Fernmessverfahren erfordern eine gute Strahlqualität trotz störender externer Einflüsse. Die selbstheilenden Eigenschaften von Bessel-Strahlen entlang der Propagationsrichtung sind daher vorteilhaft für atmosphärische Anwendungen, Interferometrie und Tiefenspektroskopie.

## Patentansprüche

1. Vorrichtung zur Erzeugung eines Bessel-Strahls (5), mit einem Strahlformungselement (2), das einen als ebene elektromagnetische Welle einfallenden Strahl (1) in einen Bessel-Strahl (5) transformiert, wobei das Strahlformungselement (2) wenigstens eine Ringlinse (3, 3') und eine Fourieroptik umfasst, wobei das Strahlformungselement (2) eine ringförmige Apertur aufweist, die mit der Ringlinse (3, 3') korrespondiert, **dadurch gekennzeichnet, dass** die ringförmige Apertur dadurch gebildet ist, dass die Ringlinse (3, 3') in den planen Bereichen außerhalb ihrer konvex oder konkav geformten ringförmigen Bereiche reflektierend oder absorbierend beschichtet ist.

2. Vorrichtung nach Anspruch 1, **dadurch gekennzeichnet, dass** die Fourieroptik eine Fourierlinse (4) ist.

3. Vorrichtung nach Anspruch 2, **dadurch gekennzeichnet, dass** die Fokusebenen der Ringlinse (3, 3') und der Fourierlinse (4) zusammenfallen, so dass die Ringlinse (3, 3') und die Fourierlinse (4) eine Kepler-Konfiguration oder eine Galilei-Konfiguration bilden.

4. Vorrichtung nach einem der Anspruch 2 oder 3, **dadurch gekennzeichnet, dass** die Ringlinse (3, 3') mit der Fourierlinse (4) einstückig ausgebildet ist.

5. Vorrichtung nach einem der Ansprüche 1 bis 4, **dadurch gekennzeichnet, dass** das Strahlformungselement (2) zwei oder mehr konzentrische Ringlinsen aufweist.

6. Vorrichtung nach einem der Ansprüche 1 bis 5, **gekennzeichnet durch** ein im Strahlengang angeordnetes Phasenmanipulationselement, das dem Strahl eine über den Strahlquerschnitt variierende Phasenverschiebung aufprägt.

7. Vorrichtung nach Anspruch 6, **dadurch gekennzeichnet, dass** das Phasenmanipulationselement dem Strahl eine helikale Phasenverschiebung aufprägt.

8. Vorrichtung nach Anspruch 6 oder 7, **dadurch gekennzeichnet, dass** das Phasenmanipulationselement eine Phasenplatte (7) mit bezüglich der Strahlachse (6) in radialer Richtung und/oder in Umfangsrichtung variierender Dicke ist.

9. Vorrichtung nach einem der Ansprüche 1 bis 8, **gekennzeichnet durch** ein dem Strahlformungselement (2) im Strahlverlauf vorgeschaltetes Strahlvorformungselement (8), das den einfallenden Strahl (0) in einen Strahl (1) mit ringförmigem Querschnitt transformiert.

10. Vorrichtung nach Anspruch 9, **dadurch gekennzeichnet, dass** das Strahlvorformungselement (8) ein konkaves Axicon (9) und ein diesem im Strahlverlauf nachgeschaltetes konvexes Axicon (10) umfasst.

## Claims

1. Apparatus for producing a Bessel beam (5), comprising a beamforming element (2) which transforms a beam (1) incident as a plane electromagnetic wave into a Bessel beam (5), wherein the beamforming element (2) comprises at least one annular lens (3, 3') and a Fourier optical system, wherein the beamforming element (2) comprises an annular aperture which corresponds to the annular lens (3, 3'),
**characterised in that**
the annular aperture is formed by providing the annular lens (3, 3') in the planar regions outside its convex or concave annular regions with a reflective or absorbent coating.

2. Apparatus according to claim 1, **characterised in that** the Fourier optical system is a Fourier lens (4).

3. Apparatus according to claim 2, **characterised in that** the focal planes of the annular lens (3, 3') and the Fourier lens (4) coincide so that the annular lens (3, 3') and the Fourier lens (4) form a Keplerian configuration or a Galilean configuration.

4. Apparatus according to one of claims 2 or 3, **characterised in that** the annular lens (3, 3') is formed as a single piece with the Fourier lens (4).

5. Apparatus according to one of claims 1 to 4, **characterised in that** the beamforming element (2) comprises two or more concentric annular lenses.

6. Apparatus according to one of claims 1 to 5, **characterised by** a phase manipulation element which is arranged in the optical path and imposes a phase shift on the beam that varies over the beam cross-section.

7. Apparatus according to claim 6, **characterised in that** the phase manipulation element imposes a helical phase shift on the beam.

8. Apparatus according to claim 6 or 7, **characterised in that** the phase manipulation element is a phase plate (7), the thickness of which varies in the radial direction and/or in the circumferential direction relative to the beam axis (6).

9. Apparatus according to one of claims 1 to 8, **characterised by** a beam-preforming element (8) which is arranged in the beam path upstream of the beamforming element (2) and transforms the incident beam (0) into a beam (1) with an annular cross-section.

10. Apparatus according to claim 9, **characterised in that** the beam-preforming element (8) comprises a concave axicon (9) and a convex axicon (10) arranged in the beam path downstream thereof.

## Revendications

1. Dispositif pour produire un faisceau de Bessel (5), doté d'un élément de formation de faisceau (2), qui transforme un faisceau (1) incident sous la forme d'une onde électromagnétique plane en un faisceau de Bessel (5), l'élément de formation de faisceau (2) comprenant au moins une lentille à échelons (3, 3') et un système optique de Fourier, l'élément de formation de faisceau (2) comportant une ouverture annulaire qui correspond à la lentille à échelons (3, 3'),
**caractérisé en ce que**
l'ouverture annulaire est formée par le fait que la lentille à échelons (3, 3') est revêtue de manière réfléchissante ou absorbante dans les zones planes situées en dehors de ses zones annulaires convexes ou concaves.

2. Dispositif selon la revendication 1, **caractérisé en ce que** le système optique de Fourier est une lentille de Fourier (4).

3. Dispositif selon la revendication 2, **caractérisé en ce que** les plans focaux de la lentille à échelons (3, 3') et de la lentille de Fourier (4) coïncident, de telle sorte que la lentille à échelons (3, 3') et la lentille de Fourier (4) forment une configuration de Kepler ou une configuration de Galilée.

4. Dispositif selon l'une des revendications 2 ou 3, **caractérisé en ce que** la lentille à échelons (3, 3') est réalisée d'un seul tenant avec la lentille de Fourier (4).

5. Dispositif selon l'une des revendications 1 à 4, **caractérisé en ce que** l'élément de formation de faisceau (2) comporte deux lentilles à échelons concentriques ou plus.

6. Dispositif selon l'une des revendications 1 à 5, **caractérisé par** un élément de manipulation de phase disposé dans le trajet du faisceau, qui applique au faisceau un décalage de phase variable sur la section transversale du faisceau.

7. Dispositif selon la revendication 6, **caractérisé en ce que** l'élément de manipulation de phase applique au faisceau un décalage de phase hélicoïdal.

8. Dispositif selon la revendication 6 ou 7, **caractérisé en ce que** l'élément de manipulation de phase est un filtre déphasant (7) avec une épaisseur variable dans la direction radiale et/ou la direction circonférentielle par rapport à l'axe de faisceau (6).

9. Dispositif selon l'une des revendications 1 à 8, **caractérisé par** un élément de préformation de faisceau (8) monté en amont de l'élément de formation de faisceau (2) dans la trajectoire du faisceau, ledit élément de préformation de faisceau transformant le faisceau incident (0) en un faisceau (1) à section transversale annulaire.

10. Dispositif selon la revendication 9, **caractérisé en ce que** l'élément de préformation de faisceau (8) comprend un axicon concave (9) et un axicon convexe (10) monté en aval de celui-ci dans la trajectoire du faisceau.
